# EUROPEAN PATENT APPLICATION

(11) **EP 4 283 489 A1**
(43) Date of publication of application: **29.11.2023**
(21) Application number: 22759938.8
(22) Date of filing: 09.02.2022
(51) Int. Cl.: G06F 16/36, G06F 40/242, G06F 40/247, G06F 16/242, G06F 16/2453

(54) **ELECTRONIC DEVICE FOR PROVIDING SEARCH SERVICE, AND OPERATING METHOD THEREFOR**

(30) Priority: 26.02.2021 KR 20210026123
(71) Applicant: Samsung Electronics Co., Ltd., Suwon-si, Gyeonggi-do 16677 (KR)
(72) Inventor: EOM, Yuyoul, Suwon-si Gyeonggi-do 16677 (KR); KWAK, Jungki, Suwon-si Gyeonggi-do 16677 (KR); KIM, Jinwook, Suwon-si Gyeonggi-do 16677 (KR)
(74) Representative: Nederlandsch Octrooibureau
(86) International application number: PCT/KR2022/002001
(87) International publication number: WO 2022/182020

(57) **Abstract**

According to various embodiments, an electronic device comprises a communication module and a processor, wherein the processor can be configured to: collect a plurality of first logs related to search terms acquired from a plurality of electronic devices through the communication module; identify, from the plurality of first logs, a plurality of second logs classified by session, which (1) is established within a first specific period and (2) is related to a first search term specified by means of an interaction designated to release a session and first content specified by means of the interaction; calculate information about the number of first valid searches of a first candidate term corresponding to the first search term by using the plurality of second logs; calculate, on the basis of the information about the number of first valid searches exceeding a first threshold value, the lifetime of the first candidate term by using the first specific period and the information about the number of first valid searches; and associate the first candidate term with the first search term, and then register the first candidate term and the lifetime in a dictionary for search. Other various embodiments are possible.

## Description

### [Technical Field]

Various embodiments relate to a method and device for providing a search service.

### [Background Art]

With the rapid spread of user devices, such as smartphones or tablet personal computers (PCs), various services are provided through user devices. For example, the user device provides various information to the user by executing various functions on an application.

The electronic device may provide information requested by the user device through a search service. For example, when obtaining a search word from the user device, the electronic device may search for information related to the search word and provide the searched information to the user device.

### [Detailed Description of the Invention]

### [Technical Problem]

When registering words, such as neologisms, abbreviations, synonyms, or synonyms, as manuals in the search dictionary, it is difficult for the manager of the search server to determine whether the words are registered in the search dictionary and whether the words need to be registered in the search dictionary, and it may take a long time to register such words in the dictionary due to the period of determining the relevant matters.

Various embodiments may provide an electronic device for registering an unregistered word in a dictionary together with a lifetime calculated based on the number of searches of the word and adjusting the lifetime of the registered word by using a plurality of logs classified by specific session based on a similarity between search words specified by an interaction and a similarity between contents specified by an interaction.

### [Technical Solution]

According to various embodiments, an electronic device may comprise a communication module and a processor. The processor may be configured to collect a plurality of first logs regarding search words obtained from a plurality of electronic devices through the communication module, identify a plurality of second logs classified per session (1) established within a first specific period and (2) related to a first search word specified by a designated interaction to release a session and first content specified by the interaction, among the plurality of first logs, calculate information about a first effective search count for a first candidate word corresponding to the first search word using the plurality of second logs, calculate a lifetime of the first candidate word using the information about the first effective search count and the first specific period, based on the information about the first effective search count exceeding a first threshold, and associate the first candidate word to the first search word and register the first candidate word and the lifetime in a search dictionary.

According to various embodiments, a method for operating an electronic device may comprise collecting a plurality of first logs regarding search words obtained from a plurality of electronic devices through a communication module, identifying a plurality of second logs classified per session (1) established within a first specific period and (2) related to a first search word specified by a designated interaction to release a session and first content specified by the interaction, among the plurality of first logs, calculating information about a first effective search count for a first candidate word corresponding to the first search word using the plurality of second logs, calculating a lifetime of the first candidate word using the information about the first effective search count and the first specific period, based on the information about the first effective search count exceeding a first threshold, and associating the first candidate word to the first search word and registering the first candidate word and the lifetime in a search dictionary.

According to various embodiments, an electronic device may comprise a communication module, a display, and a processor configured to obtain a search dictionary from an external electronic device through the communication module, obtain a first word from a user, and display a second word through the display when the first word is registered in the dictionary to be associated with the second word, and a lifetime of the first word registered in the dictionary is effective. The first word may be registered to be associated with the second word in the dictionary, based on information about a first effective search count for the first word exceeding a first threshold, the information about the effective search count being calculated using a plurality of second logs classified per session (1) established within a first specific period and (2) related to the second word specified by a designated interaction to release a session and first content specified by the interaction, among a plurality of first logs regarding search words obtained from a plurality of electronic devices. The lifetime of the first word may be calculated using the information about the first effective search count and the first specific period and may be, together with the first word, registered in the dictionary.

### [Advantageous Effects]

According to various embodiments, it is possible to provide a method for automatically managing (word registration/release/change) a dictionary for a search, and based thereupon, minimize intervention of the manager of the electronic device, reducing management costs and increasing the accuracy of the search to enhance search quality.

### [Brief Description of Drawings]

FIG. 1 is a view illustrating an electronic device in a network environment according to various embodiments;
FIG. 2 is another block diagram illustrating an electronic device according to various embodiments;
FIG. 3 is a flowchart illustrating an operation for an electronic device to calculate the lifetime of a candidate word corresponding to a registered search word and register the candidate word and the lifetime of the candidate word in a dictionary according to various embodiments;
FIG. 4A is a first sequence diagram illustrating an operation for an electronic device to register a candidate word and the lifetime of the candidate word in a dictionary according to various embodiments;
FIG. 4B is a second sequence diagram illustrating an operation for an electronic device to register a candidate word and the lifetime of the candidate word in a dictionary according to various embodiments;
FIG. 5 is a view illustrating an embodiment in which an electronic device establishing sessions with a plurality of electronic devices, respectively, within a specific period according to various embodiments;
FIG. 6A is a graph illustrating the total number of searches for search words and the number of effective searches for candidate words according to various embodiments;
FIG. 6B is a graph illustrating an effective search rate for candidate words according to various embodiments;
FIG. 7 is a flowchart illustrating an operation for an electronic device to adjust the registration lifetime of a candidate word registered in a dictionary according to various embodiments;
FIG. 8 is a sequence diagram illustrating an operation for an electronic device to adjust the registration lifetime of a candidate word registered in a dictionary according to various embodiments;
FIG. 9 is a flowchart illustrating an operation for an electronic device to display a second word associated with a first word using a dictionary obtained from an external electronic device according to various embodiments; and
FIG. 10 is a view illustrating an embodiment in which an electronic device displays a second word associated with a first word according to various embodiments.

### [Mode for Carrying out the Invention]

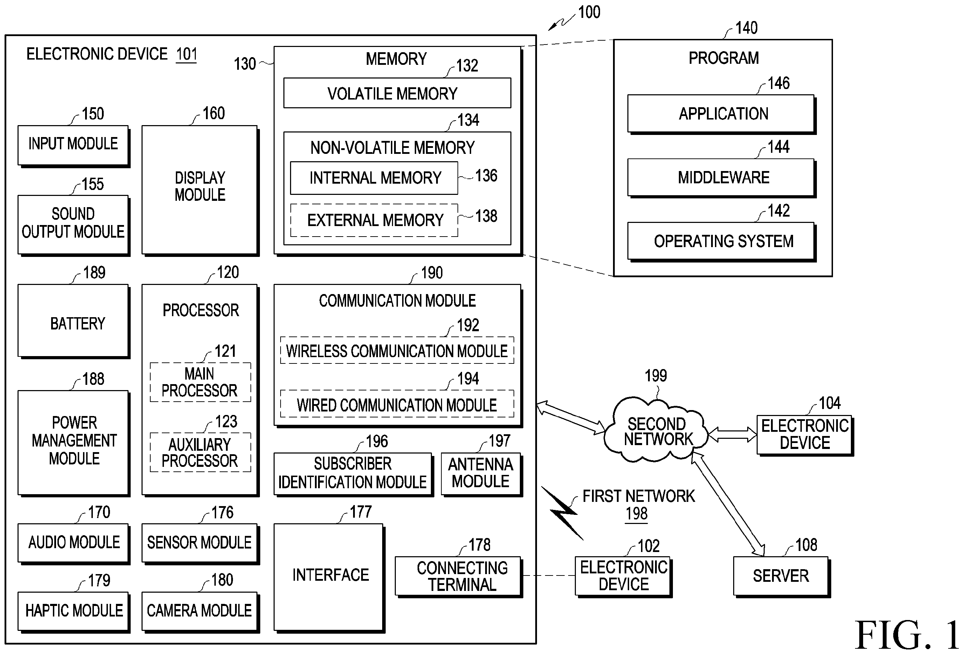

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductive body or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

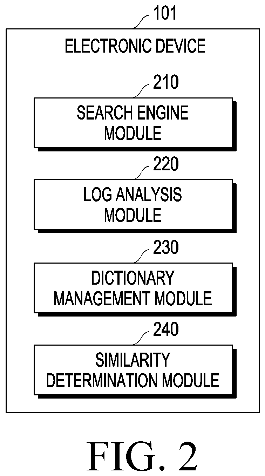

FIG. 2 is another block diagram illustrating an electronic device 101 according to various embodiments.

According to various embodiments, the electronic device 101 may be a server for providing a search service, and may include a search engine module 210, a log analysis module 220, a dictionary management module 230, and/or a similarity determination module 240. According to an embodiment, at least some of the search engine module 210, the log analysis module 220, the dictionary management module 230, and/or the similarity determination module 240 may be stored, as software modules, in a memory (e.g., the memory 130 of FIG. 1) and may be executed by being loaded by the processor 120.

According to various embodiments, the search engine module 210 may obtain a search word from an external electronic device (e.g., the electronic device 102 of FIG. 1) and may provide a search result for the search word to the external electronic device 102 by referring to an index or a dictionary. In an embodiment of the disclosure, search words may be divided into registered search words corresponding to words registered in a search index or a search dictionary and unregistered search words (hereinafter, referred to as 'candidate words') corresponding to words not registered in the index or the dictionary. For example, words provided in a predetermined form by the creator or manager of an application related to the words may be registered in the index. The dictionary registers, e.g., words associated with words registered in the index as words corresponding to neologisms, abbreviations, synonyms, foreign phonetic transcription words (e.g., loanwords), or synonyms of words registered in the index.

According to various embodiments, the log analysis module 220 may collect, as a log about a search word, a search word, whether an interaction with a search result of the search word is detected, and/or information about content specified by the interaction. According to an embodiment, the log analysis module 220 may classify the collected logs for each session meeting each condition by analyzing the collected logs.

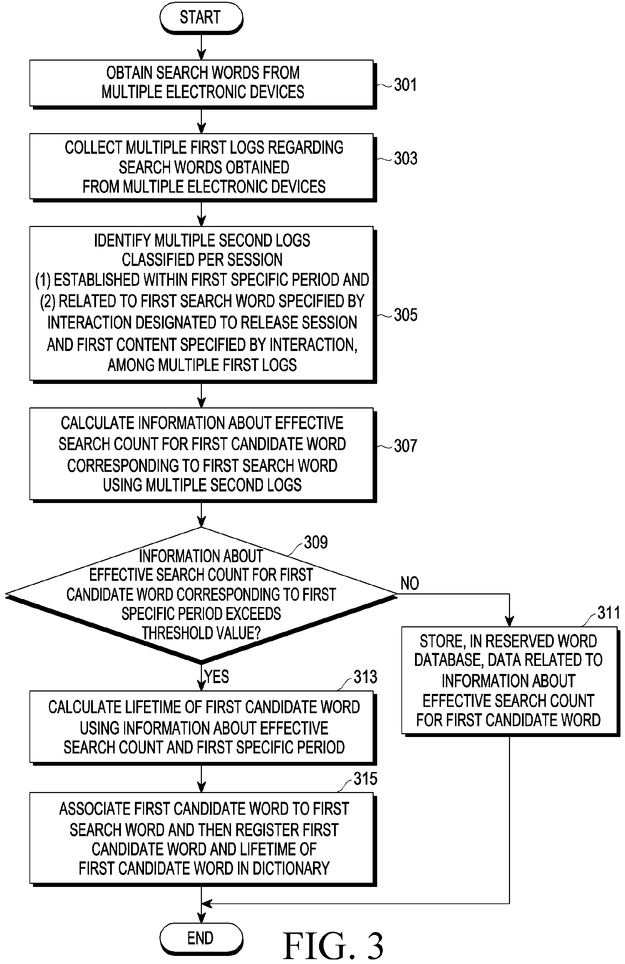

According to various embodiments, the dictionary management module 230 may calculate information about an effective search count for a candidate word (e.g., unregistered search word) corresponding to a registered search word related to release of a session within the session related to the search word among sessions established during a specific period. According to an embodiment, 'session' may denote a predetermined time period (e.g., N seconds) from the time when the electronic device 101 obtains the search word through a designated screen from a plurality of electronic devices. According to an embodiment, 'session' may denote a time period from the time when the electronic device 101 obtains the search word through a designated screen from a plurality of electronic devices to the time when an interaction designated to release the session is detected. The session is described below in operation 301 of FIG. 3. According to an embodiment, the dictionary management module 230 may calculate the lifetime of the candidate word using information about the effective search count and/or the specific period. According to an embodiment, after associating the candidate word with the search word, the dictionary management module 230 may register the candidate word in the search dictionary and may also register the lifetime of the candidate word in the dictionary.

According to various embodiments, the similarity determination module 240 may calculate a similarity between the obtained search words, and may identify other search words having a similarity exceeding a similarity predetermined for the specific search word by using the similarity calculation result. According to an embodiment, the similarity determination module 240 may calculate the vectors of search words using a word embedding technology such as word2vec or fasttext to determine semantic similarity between search words, and may measure the similarity between search words by applying an algorithm such as euclidean similarity, cosine similarity, pearson correlation coefficient, or jaccard coefficient to the calculated vectors. According to an embodiment of the disclosure, the similarity determination module 240 may measure the similarity between search words based on the character string forming the search word according to an edit distance algorithm. According to an embodiment, the similarity determination module 240 may calculate a similarity between a registered search word and a candidate word, and may identify candidate words having a similarity exceeding a similarity predetermined for the registered search word, by using the similarity calculation result. According to an embodiment, the similarity determination module 240 may calculate a similarity between the obtained contents, and may identify other contents having a similarity exceeding a similarity predetermined for the specific content by using the similarity calculation result. According to an embodiment, the similarity determination module 240 may determine the similarity between the contents based on the attribute and/or category of the application corresponding to the content. According to an embodiment, the similarity determination module 240 may extract a topic or a representative keyword of the content by applying a topic modeling technology such as latent dirichlet allocation (LDA) or hierarchical dirichlet process (HDP) to the title and/or content of the text corresponding to the content, and may calculate the similarity between the extracted topics or representative keywords using an algorithm such as euclidean similarity, cosine similarity, pearson correlation coefficient, or jaccard coefficient, thereby measuring the similarity between the contents.

FIG. 3 is a flowchart illustrating an operation for an electronic device (e.g., the electronic device 101 of FIG. 1) to calculate the lifetime of a candidate word corresponding to a registered search word and register the candidate word and the lifetime of the candidate word in a dictionary according to various embodiments.

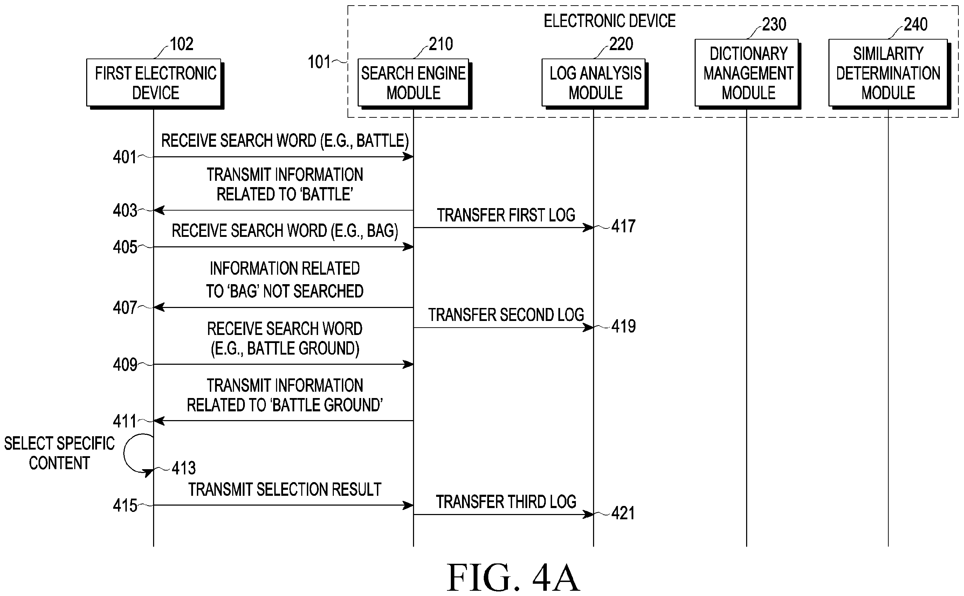

FIG. 4A is a first sequence diagram illustrating an operation for an electronic device 101 to register a candidate word and the lifetime of the candidate word in a dictionary according to various embodiments.

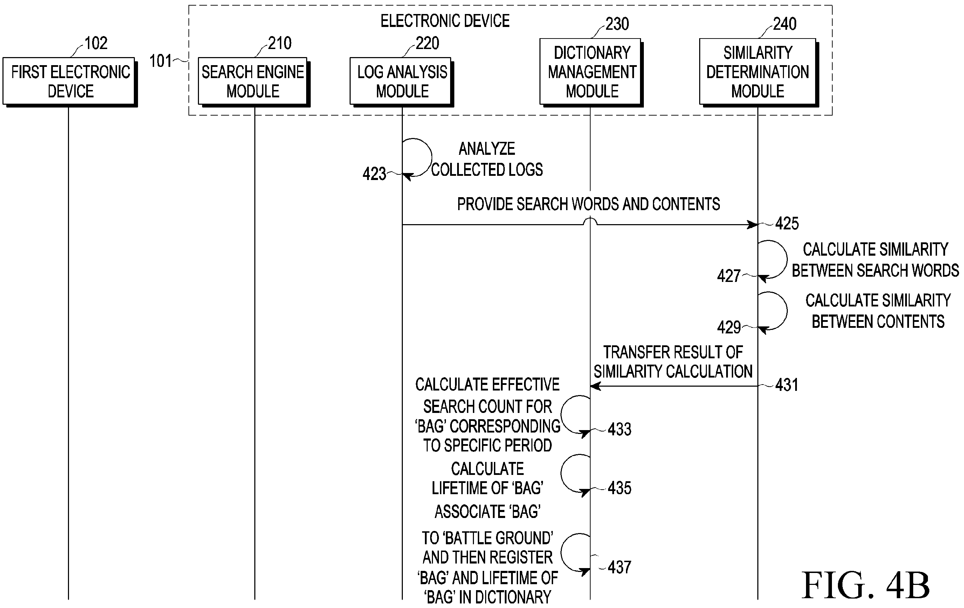

FIG. 4B is a second sequence diagram illustrating an operation for an electronic device 101 to register a candidate word and the lifetime of the candidate word in a dictionary according to various embodiments.

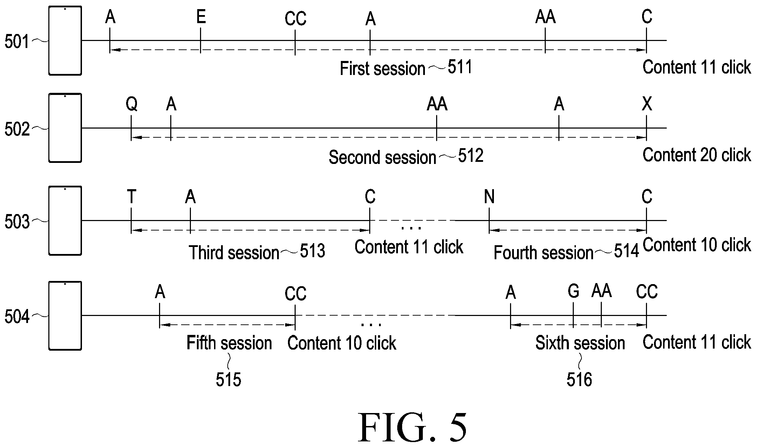

FIG. 5 is a view illustrating an embodiment in which an electronic device 101 establishing sessions with a plurality of electronic devices, respectively, within a specific period according to various embodiments.

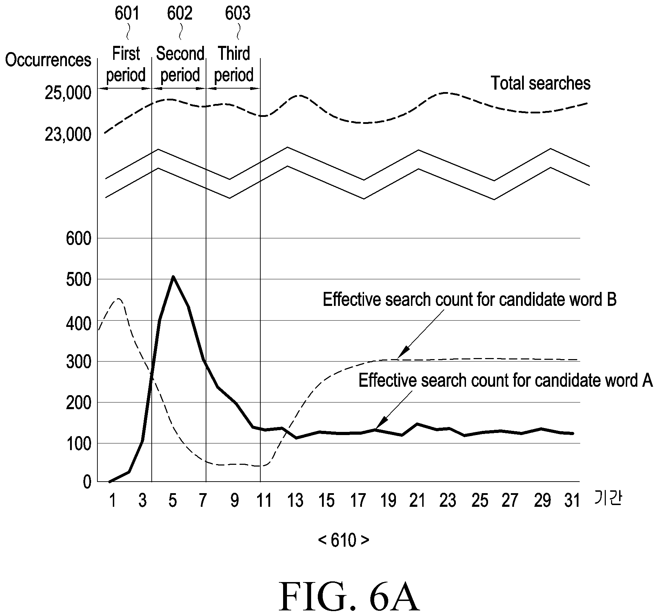

FIG. 6A is a graph illustrating the total number of searches for search words and the number of effective searches for candidate words according to various embodiments.

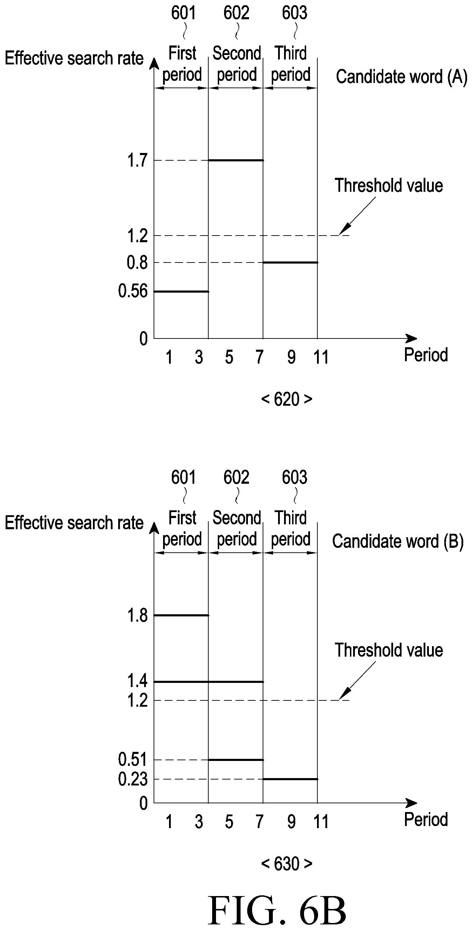

FIG. 6B is a graph illustrating an effective search rate for candidate words according to various embodiments.

In operation 301, according to various embodiments, the electronic device 101 (e.g., the processor 120 of FIG. 1) may obtain search words from a plurality of electronic devices through a communication module (e.g., the communication module 190 of FIG. 1). For example, referring to FIG. 4, a search engine module (e.g., the search engine module 210 of FIG. 2) of the electronic device 101 may receive (401) a search word (e.g., battle) from a first electronic device (e.g., the electronic device 102 of FIG. 1) and may transmit (403) a search result (e.g., information related to "battle") of the search word to the first electronic device 102.

According to various embodiments, the electronic device 101 (e.g., the processor 120 of FIG. 1) may establish a session with a plurality of electronic devices. According to an embodiment, 'session' may denote a predetermined time period (e.g., N seconds) from the time when the electronic device 101 obtains the search word through a designated screen from a plurality of electronic devices. The specified screen may be, e.g., a screen (e.g., a home screen) initially displayed when accessing an application (e.g., a web browser) operated by the electronic device 101. For example, referring to FIG. 4, the electronic device 101 may establish a session with the first electronic device 102, based on obtaining a search word (e.g., battle) from the first electronic device 102 through a search interface in the home screen displayed on the first electronic device 102. According to an embodiment, 'session' may denote a time period from the time when the electronic device 101 obtains the search word through a designated screen from a plurality of electronic devices to the time when an interaction designated to release the session is detected. For example, the interaction may include an event related to selection of the specific content (e.g., a touch input to the specific content or a click input to the specific content) among search results for the search word. As another example, the interaction may include an event related to a screen scroll (e.g., occurrence of scrolling on the screen displayed according to selection of specific content and/or occurrence of the scroll the predetermined number of times). As another example, the interaction may include an event related to the time of staying on the screen (e.g., the time of staying on the screen displayed according to selection of the specific content corresponds to a predetermined time). As another example, the interaction may include installing specific content or downloading specific content among search results for the search word.

According to various embodiments, the electronic device 101 (e.g., the processor 120 of FIG. 1) may obtain a plurality of search words from a plurality of electronic devices during the session established with the plurality of electronic devices. For example, referring to FIG. 4, the search engine module 210 of the electronic device 101 may receive (405) a search word (e.g., bag) from the first electronic device 102 within the session established with the first electronic device 102, and may transmit (407) a search result of the search word (e.g., information related to "bag" is not searched) to the first electronic device 102. For example, referring to FIG. 4, the search engine module 210 of the electronic device 101 may receive (409) a search word (e.g., battle ground) from the first electronic device 102 and may transmit (411) the search result (e.g., information related to `battle ground") of the search word to the first electronic device 102. According to an embodiment, the electronic device 101 may release the established session, based on detecting an interaction designated to release the established session. For example, referring to FIG. 4, when the first electronic device 102 selects (e.g., clicks) (413) a specific content from the search word search result (e.g., information related to "battle ground"), the first electronic device 102 may transmit (415) the selection result to the electronic device 101, and the electronic device 101 may release the session with the first electronic device 102 based on detection of the selection result.

In operation 303, according to various embodiments, the electronic device 101 (e.g., the processor 120 of FIG. 1) may collect a plurality of first logs related to search words obtained from a plurality of electronic devices. According to an embodiment, the electronic device 101 may collect, as a log about a search word, a search word, whether an interaction with a search result of the search word is detected, and/or information about content specified by the interaction. For example, referring to FIG. 4, the search engine module 210 may transfer (417) a first log including the search word (e.g., battle), whether an interaction is detected (e.g., not detected), and information about content (e.g., null) to a log analysis module (e.g., the log analysis module 220 of FIG. 2). As another example, the search engine module 210 may transfer (419) a second log including the search word (e.g., bag), whether an interaction is detected (e.g., not detected), and information about content (e.g., null) to the log analysis module 220. As another example, the search engine module 210 may transfer (421) a second log including the search word (e.g., battle ground), whether an interaction is detected (e.g., detected), and information about content (e.g., specific content related to `battle ground') to the log analysis module 220. According to an embodiment, the electronic device 101 may store the collected logs in a memory (e.g., the memory 130 of FIG. 1).

According to various embodiments, the electronic device 101 (e.g., the processor 120 of FIG. 1) may classify a plurality of collected first logs per session. For example, referring to FIG. 4, the log analysis module 220 may classify logs per session by analyzing the collected logs 423. Referring to FIG. 5, the electronic device 101 may classify a first set of logs regarding search words obtained during a first session 511 established with a first electronic device 501, a second set of logs regarding search words obtained during a second session 512 established with a second electronic device 502, a third set of logs regarding search words obtained during a third session 513 established with a third electronic device 503, a fourth set of logs regarding search words obtained during a fourth session 514 established with the third electronic device 503, a fifth set of logs regarding search words obtained during a fifth session 515 established with a fourth electronic device 504, and/or a sixth set of logs regarding search words obtained during a sixth session 516 established with the fourth electronic device 504.

In operation 305, according to various embodiments, the electronic device 101 (e.g., the processor 120 of FIG. 1) may identify a plurality of second logs classified per session established within a first specific period and related to a first search word specified by an interaction designated to release the session and/or first content specified by the interaction among a plurality of first logs. It is assumed that the first search word described below is registered in a search index or dictionary.

According to various embodiments, the electronic device 101 (e.g., the processor 120 of FIG. 1) may identify, among a plurality of first logs, a plurality of second logs related to search words searched in sessions established within a first specific period. For example, referring to <610> of FIG. 6A, the electronic device 101 may identify a plurality of second logs related to search words searched in sessions established within the first period 601.

According to various embodiments, the electronic device 101 (e.g., the processor 120 of FIG. 1) may identify a first search word specified by an interaction designated to release the session and first content specified by the interaction, among the plurality of first logs. For example, referring to FIG. 4, the log analysis module 220 may identify logs indicating detection of an interaction designated to release a session by analyzing the collected logs 423, and may identify the first search word specified by the interaction and the first content specified by the interaction from the identified logs. Referring to FIG. 5, the electronic device 101 may identify a log indicating detection of an interaction (e.g., click) designated to release the first session 511 established with the first electronic device 501, and may identify the first content (e.g., content 11) where the interaction is performed and the first search word (e.g., "C") used to search for the first content from the identified log.

According to an embodiment, the electronic device 101 may identify a plurality of second logs classified per session related to the first search word and the first content. For example, referring to FIG. 5, the electronic device 101 may identify the first session 511 and the third session 513, as sessions related to the first search word (e.g., 'C') specified by the interaction and the first content (e.g., content 11) specified by the interaction and identify the first set of logs regarding the search words obtained during the first session 511 and the third set of logs regarding the search words obtained during the third session 513, as the plurality of second logs.

According to various embodiments, the electronic device 101 (e.g., the processor 120 of FIG. 1) may identify the plurality of second logs classified per session related to the first search word specified by the interaction designated to release the session or the second search word corresponding to the first search word and the first content specified by the interaction or the second content corresponding to the first content. It is assumed that the second search word described below is registered in a search index or dictionary.

According to an embodiment, the electronic device 101 may identify the second search word corresponding to the first search word among the search words specified by the interaction designated to release the session using the plurality of first logs and identify the second content corresponding to the first content among the contents specified by the interaction. For example, referring to FIG. 4, the log analysis module 220 may identify logs indicating detection of an interaction designated to release a session, and may provide (425) search words specified by the interaction and content specified by the interaction from the identified logs to a similarity determination module (e.g., the similarity determination module 240 of FIG. 2). According to various embodiments, for example, the similarity determination module 240 may calculate (427) a similarity between the obtained search words, and may identify a second search word having a similarity exceeding a similarity predetermined for the first search word by using the similarity calculation result. For example, the similarity determination module 240 may calculate (429) a similarity between the obtained contents, and may identify the second content having a similarity exceeding a similarity predetermined for the first content by using the similarity calculation result. The similarity determination module 240 may transmit, e.g., a similarity calculation result of the first search word and/or a similarity calculation result of the first content to the dictionary management module 230. Referring to FIG. 5, the electronic device 101 may identify a second search word (e.g., `CC') similar to the first search word (e.g., 'C') among search words specified by the interaction (e.g., click) designated to release the first session 511 to the sixth session 516, based on the result of calculating the similarity between the search words, and may identify second content (e.g., content 10) similar to the first content (e.g., content 11) among the contents specified by the interaction, based on the result of calculating the similarity between the content. In this case, the electronic device 101 may identify that the search word (e.g., "X") designated by the interaction specified to release the second session 512 is not similar to the first search word (e.g., "C") and that the content (e.g., content 20) specified by the interaction is not similar to the first content (e.g., content 11).

According to an embodiment, the electronic device 101 may identify a plurality of second logs classified per session related to the first search word or the second search word corresponding to the first search word and the first content or the second content corresponding to the first content. For example, referring to FIG. 5, the electronic device 101 may identify the fourth session 514 as the session related to the first search word (e.g., "C") and the second content (e.g., content 10) similar to the first content (e.g., content 11), and may identify the fourth set of logs related to search words obtained during the fourth session 514 as the plurality of second logs. As another example, the electronic device 101 may identify the sixth session 516 as the session related to the second search word (e.g., "CC") similar to the first search word (e.g., "C") and the first content (e.g., content 11), and may identify the sixth set of logs related to search words obtained during the sixth session 516 as the plurality of second logs. As another example, the electronic device 101 may identify the fifth session 515 as the session related to the second search word (e.g., "CC") similar to the first search word (e.g., "C") and the second content (e.g., content 10) similar to the first content (e.g., content 11), and may identify the fifth set of logs related to search words obtained during the fifth session 515 as the plurality of second logs.

In operation 307, according to various embodiments, the electronic device 101 (e.g., the processor 120 of FIG. 1) may calculate information about the effective search count for the first candidate word corresponding to the first search word, using the plurality of second logs. For example, the information about the effective search count may be one of an effective search count or an effective search rate, and the calculation method is described below.

According to various embodiments, the electronic device 101 (e.g., the processor 120 of FIG. 1) may identify a first candidate word corresponding to the first search word associated with releasing the corresponding session among search words searched in each session established within the first specific period. For example, the similarity determination module 240 may calculate the similarity between the first search word associated with releasing the session and search words searched in the session, and may identify the first candidate word having the similarity exceeding the similarity predetermined for the first search word by using the similarity calculation result. Referring to FIG. 5, the electronic device 101 may calculate the similarity between the first search word (e.g., 'C') specified by an interaction designated to release the first session 511 and corresponding to a registered search word and the remaining unregistered search words (e.g., 'A', 'E', and 'AA') among search words (e.g., 'A (unregistered)', 'E (unregistered)', 'CC (registered)', 'A (unregistered)', 'AA (unregistered), and 'C (registered)') searched in the first session 511, and identify the first candidate word (e.g., 'A' or 'AA') having the similarity exceeding the similarity predetermined for the first search word and corresponding to an unregistered search word. As another example, the electronic device 101 may calculate the similarity between the first search word (e.g., 'C') specified by an interaction designated to release the third session 513 and corresponding to a registered search word and the remaining unregistered search words (e.g., 'T' and 'A') among search words (e.g., 'T (unregistered)', 'A (unregistered)', and 'C (registered)) searched in the third session 513, and may identify the first candidate word (e.g., 'A') having the similarity exceeding the similarity predetermined for the first search word and corresponding to an unregistered search word. As another example, the electronic device 101 may calculate the similarity between the first search word (e.g., 'C') specified by an interaction designated to release the fourth session 514 and corresponding to a registered search word and the remaining unregistered search word (e.g., 'N') among search words (e.g., 'N (unregistered)' and 'C (registered)) searched in the fourth session 514, and may identify that there is no first candidate word corresponding to the unregistered search word and having the similarity exceeding the similarity predetermined for the first search word. As another example, the electronic device 101 may calculate the similarity between the first search word (e.g., 'CC') specified by an interaction designated to release the fifth session 515 and corresponding to a registered search word and the remaining unregistered search word (e.g., 'A') among search words (e.g., 'A (unregistered)' and 'CC (registered)) searched in the fifth session 515, and may identify the first candidate word (e.g., 'A') corresponding to an unregistered search word having the similarity exceeding the similarity predetermined for the first search word. As another example, the electronic device 101 may calculate the similarity between the first search word (e.g., 'CC') specified by an interaction designated to release the sixth session 516 and corresponding to a registered search word and the remaining unregistered search words (e.g., 'A', `G, and 'AA') among search words (e.g., 'A (unregistered)', 'G (unregistered)', `AA (unregistered)', and 'CC (registered)') searched in the sixth session 516, and may identify the first candidate word (e.g., 'A' or 'AA') having the similarity exceeding the similarity predetermined for the first search word and corresponding to an unregistered search word.

According to various embodiments, the electronic device 101 (e.g., the processor 120 of FIG. 1) may calculate information about the effective search count for the first candidate word based on the session related to the first search word according to a first method. According to an embodiment, the effective search count for the first candidate word may correspond to one of the same count or smaller count of the sum of the search count for the first search word and the search count for the second search word similar to the first search word and the search count for the first candidate word in the session related to the first search word or the session related to the second search word. For example, referring to FIG. 5, when the sum (e.g., 2) of the search count (e.g., 1) for the first search word (e.g., 'C') and the search count (e.g., 1) for the second search word (e.g., `CC') in the first session 511 specified by the first search word (e.g., 'C') for the first candidate word (e.g., 'A') is identical to the search count (e.g., 2) for the first candidate word (e.g., 'A'), the electronic device 101 may count 2 as the effective search count for the first candidate word (e.g., 'A'). As another example, the electronic device 101 may count the smaller count, i.e., 1, of the sum (e.g., 2) of the search count (e.g., 1) for the first search word (e.g., 'C') and the search count (e.g., 1) for the second search word (e.g., `CC') in the first session 511 specified by the first search word (e.g., 'C') for the first candidate word (e.g., `AA') and the search count (e.g., 1) for the first candidate word (e.g., 'AA'), as the effective search count for the first candidate word (e.g., 'AA'). In the above-described manner, the electronic device 101 may identify that the effective search count for the first candidate word (e.g., 'A') corresponds to 2 in the first session 511 and 1 in the third session 513 according to the first method, and may calculate the total effective search count (e.g., 3) in the first session 511 to the sixth session 516. Similarly, the electronic device 101 may identify that the effective search count for the first candidate word (e.g., "AA") corresponds to 1 in the first session 511 according to the first method, and may calculate the total effective search count (e.g., 1) in the first session 511 to the sixth session 516.

According to various embodiments, the electronic device 101 (e.g., the processor 120 of FIG. 1) may calculate the effective search count for the first candidate word based on the session related to the second search word similar to the first search word according to a second method. For example, referring to FIG. 5, when the sum (e.g., 1) of the search count (e.g., 0) for the first search word (e.g., 'C') and the search count (e.g., 1) for the second search word (e.g., `CC') in the fifth session 515 specified by the second search word (e.g., `CC') similar to the first search word (e.g., 'C') for the first candidate word (e.g., 'A') is identical to the search count (e.g., 1) for the first candidate word (e.g., 'A'), the electronic device 101 may count 1 as the effective search count for the first candidate word (e.g., 'A'). As another example, when the sum (e.g., 1) of the search count (e.g., 0) for the first search word (e.g., 'C') and the search count (e.g., 1) for the second search word (e.g., `CC') in the sixth session 516 specified by the second search word (e.g., `CC') for the first candidate word (e.g., 'AA') is identical to the search count (e.g., 1) for the first candidate word (e.g., 'AA'), the electronic device 101 may count 1 as the effective search count for the first candidate word (e.g., 'AA'). In the above-described manner, the electronic device 101 may identify that the effective search count for the first candidate word (e.g., 'A') corresponds to 1 in the fifth session 515 and 1 in the sixth session 516 according to the second method, and may calculate the total effective search count (e.g., 2) in the first session 511 to the sixth session 516. Similarly, the electronic device 101 may identify that the effective search count for the first candidate word (e.g., "AA") corresponds to 1 in the sixth session 516 according to the second method, and may calculate the total effective search count (e.g., 1) in the first session 511 to the sixth session 516. According to an embodiment, the electronic device 101 may calculate the effective search count for the first candidate word by using both the first method and the second method. For example, referring to FIG. 5, the electronic device 101 may calculate the total effective search count (e.g., 5 ) for the first candidate word (e.g., 'A') in the first session 511 to the sixth session 516 using both the first method and the second method. According to an embodiment, the electronic device 101 may calculate the effective search count for the first candidate word by using at least one of the first method or the second method. For example, the electronic device 101 may calculate the total effective search count (e.g., 2) for the first candidate word (e.g., "AA") in the first session 511 to the sixth session 516 using both the above-described first method and the above-described second method.

According to various embodiments, the electronic device 101 (e.g., the processor 120 of FIG. 1) may calculate the effective search count for the first candidate word based on the session related to the first search word and/or the second search word during the first specific period. For example, referring to FIG. 4B, the dictionary management module 230 may calculate (433) the effective search count for the candidate word (e.g., Bag) in the session related to the search word (e.g., battle ground) among the sessions established during the specific period. Referring to <610> of FIG. 6A, the electronic device 101 may calculate the daily average effective search count (e.g., 130) for the first candidate word (e.g., 'A') in the session specified by the first search word and/or the second search word among all sessions established during a first period 601 (e.g., within the past four days from the current time (fourth day)). As another example, referring to <610> of FIG. 6A, the electronic device 101 may calculate the daily average effective search count (e.g., 400) for the first candidate word (e.g., 'A') in the session specified by the first search word and/or the second search word among all sessions established during a second period 602 (e.g., within the past three days from the current time (seventh day) after the first period 601. According to an embodiment, the electronic device 101 may calculate an effective search rate of the first candidate word using the search counts for search words searched in all sessions during the first specific period and the effective search count for the first candidate word searched in a session related to the first search word and/or the second search word during the first specific period. For example, referring to <610> of FIG. 6A, the electronic device 101 may calculate the percentage value (e.g., (130/23200)* 100=0.56) by dividing the daily average effective search count (e.g., 130) for the first candidate word searched in the session related to the first search word and/or second search word during the first period 601 by the daily average search count (e.g., 23200) for all search words searched in all the sessions during the first period 601, and determine the calculated value as the effective search rate for the first candidate word corresponding to the first period 601. As another example, referring to <610> of FIG. 6A, the electronic device 101 may calculate the percentage value (e.g., (400/23400)* 100=1.7) by dividing the daily average effective search count (e.g., 400) for the first candidate word searched in the session related to the first search word and/or second search word during the second period 602 by the daily average search count (e.g., 23500) for search words searched in all the sessions during the second period 602, and determine the calculated value as the effective search rate for the first candidate word corresponding to the second period 602.

In operation 309, according to various embodiments, the electronic device 101 (e.g., the processor 120 of FIG. 1) may determine whether the information about the effective search count for the first candidate word corresponding to the first specific period exceeds a threshold value. According to an embodiment, the threshold value may be set for the effective search count for the first candidate word or may be set for the effective search rate of the first candidate word, or be learned based on machine learning to be dynamically changed according to at least one of the search counts for all words or the effective search count for the first candidate word. For example, referring to <620> of FIG. 6B, when the threshold value (e.g., 1.2) for the effective search rate is set, the electronic device 101 may identify that the effective search rate (e.g., 0.56) of the first candidate word (e.g., 'A') corresponding to the first period 601 does not exceed the threshold value (e.g., 1.2). As another example, when the threshold value (e.g., 1.2) for the effective search rate is set, the electronic device 101 may identify that the effective search rate (e.g., 1.7) of the first candidate word (e.g., 'A') corresponding to the second period 602 exceeds the threshold value (e.g., 1.2).

In operation 311, according to various embodiments, the electronic device 101 (e.g., the processor 120 of FIG. 1) may store data related to the information about the effective search count for the first candidate word in the reserved word database, based on the information about the effective search count for the first candidate word corresponding to the first specific period being equal to or less than the threshold value. The reserved word database may be later used to calculate the effective search count for the first candidate word for a period other than the first specific period. For example, referring to <610> of FIG. 6A and <620> of FIG. 6B, the electronic device 101 may include the first candidate word as a reserved word in the reserved word database and store the reserved word in the memory (e.g., the memory 120 of FIG. 1), based on the effective search rate (e.g., 0.56) of the first candidate word (e.g., 'A') corresponding to the first period 601 being equal to or less than the threshold value (e.g., 1.2) at the time point (e.g., the fourth day) when the first period 601 has elapsed, include data related to the effective search rate of the first candidate word corresponding to the first period 601 in the reserved word database and store the same in the memory 120.

According to an embodiment, based on the information about the effective search count for the first candidate word corresponding to the first specific period not exceeding the threshold value, the electronic device 101 may determine whether the information about the effective search count for the first candidate word corresponding to the first specific period and a previous period of the first specific period exceeds the threshold value. For example, referring to <630> of FIG. 6B, when the effective search rate (e.g., 0.51) of the first candidate word (e.g., 'B') corresponding to the second period 602 does not exceed the threshold value (e.g., 1.2), the electronic device 101 may identify that the effective search rate (e.g., 1.4) of the first candidate word (e.g., 'B') corresponding to the first period 601 and the second period 602 exceeds the threshold value (e.g., 1.2) using data related to the effective search rate of the first candidate word (e.g., 'B') corresponding to the first period 601 stored in the preliminary language database.

In operation 313, according to various embodiments, the electronic device 101 (e.g., the processor 120 of FIG. 1) may calculate the lifetime of the first candidate word using the information about the effective search count and the first specific period. For example, referring to FIG. 4B, the dictionary management module 230 may calculate (435) the lifetime of the candidate word (e.g., bag) using the information about the effective search count and the first specific period. According to an embodiment, the electronic device 101 may calculate the lifetime of the first candidate word by applying the first specific period to the difference between the threshold value and the information about the effective search count for the first candidate word. For example, referring to <610> of FIG. 6A, the electronic device 101 may calculate the lifetime (e.g., 1.5 days) of the first candidate word by applying (e.g., 0.5*3=1.5) the second period 602 (e.g., 3 days) to the difference (e.g., 0.5) between the effective search rate (e.g., 1.7) of the first candidate word (e.g., 'A') corresponding to the second period 602 and the threshold value (e.g., 1.2).

In operation 315, according to various embodiments, after associating the first candidate word with the first search word, the electronic device 101 (e.g., the processor 120 of FIG. 1) may register the first candidate word and the lifetime of the first candidate word in the dictionary. For example, referring to FIG. 4B, after associating the candidate word (e.g., "bag") with the first search word (e.g., "battle ground"), the dictionary management module 230 may register the first candidate word as a search word in the dictionary, and may register the lifetime of the first candidate word calculated based on the information about the effective search count and the first specific period in the dictionary (437).

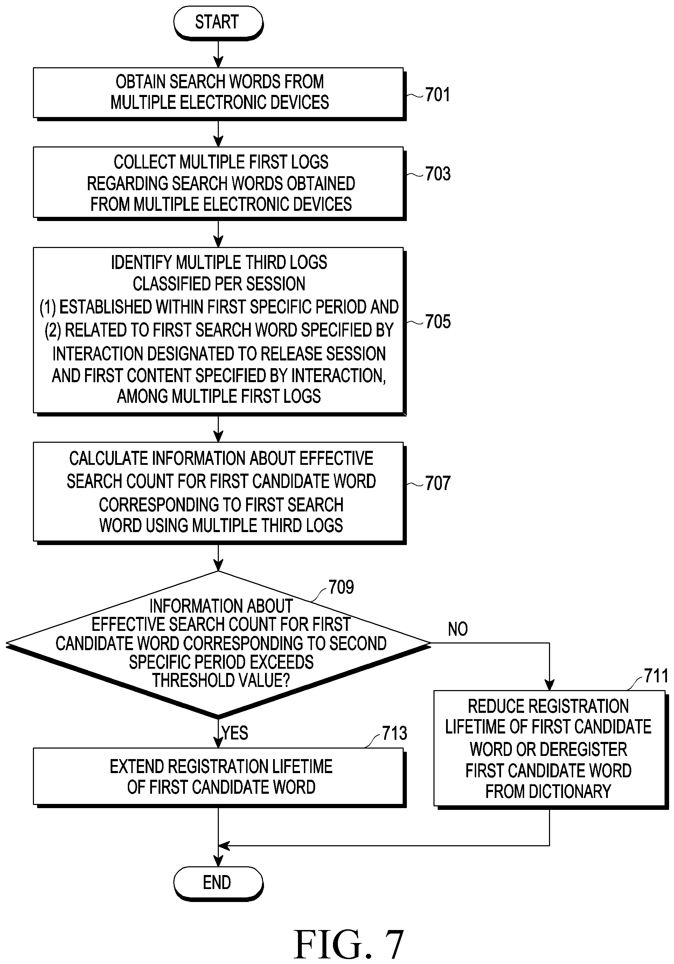

FIG. 7 is a flowchart illustrating an operation for an electronic device (e.g., the electronic device 101 of FIG. 2) to adjust the registration lifetime of a candidate word registered in a dictionary according to various embodiments.

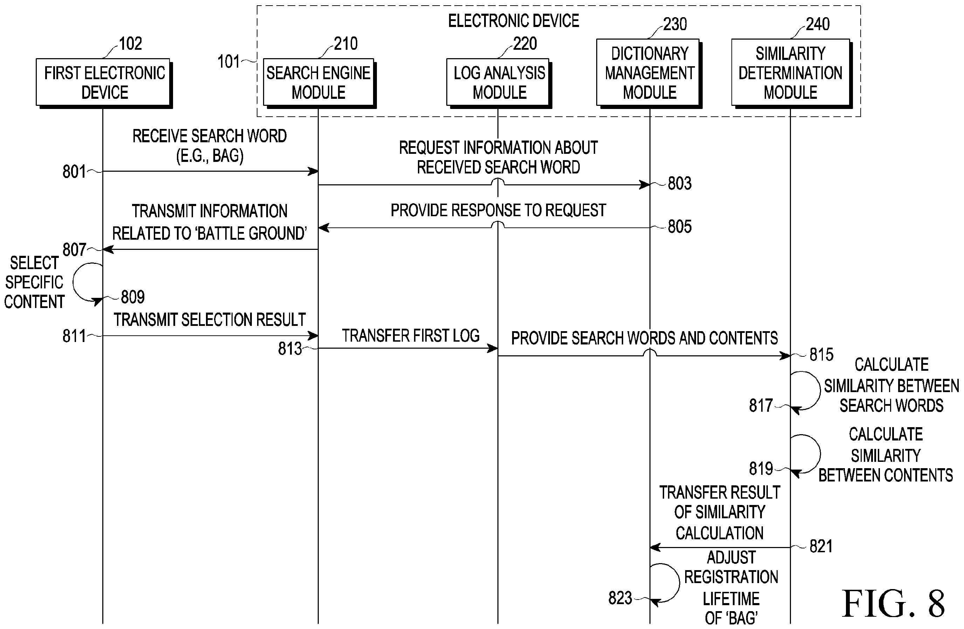

FIG. 8 is a sequence diagram illustrating an operation for an electronic device (e.g., the electronic device 101 of FIG. 1) to adjust the registration lifetime of a candidate word registered in a dictionary according to various embodiments.

In operation 701, according to various embodiments, the electronic device 101 (e.g., the processor 120 of FIG. 1) may obtain search words from a plurality of electronic devices through a communication module (e.g., the communication module 190 of FIG. 1). For example, referring to FIG. 8, a search engine module (e.g., the search engine module 210 of FIG. 2) of the electronic device 101 may receive (801) a search word (e.g., bag) from a first electronic device (e.g., the electronic device 102 of FIG. 1). According to an embodiment, the electronic device 101 may determine whether the search word received from the first electronic device 102 is registered in a search word index or dictionary. For example, referring to FIG. 8, after determining whether the search word (e.g., bag) is included in the search word index, the search engine module 210, when the search word is not included in the search word index, may request (803) information about the search word (e.g., bag) from the dictionary management module (e.g., the dictionary management module 230 of FIG. 2). When the search word (e.g., bag) is included in the dictionary, the dictionary management module 230 may provide (805) information about an associated search word (e.g., battle ground) registered to be associated with the search word to the search engine module 210 in response to the request 803. The search engine module 210 may transmit (807) a result (e.g., information related to 'battle ground') of a search using the associated search word to the first electronic device 102. The above-described operation 701 may be performed using the method described in operation 301 of FIG. 3.

In operation 703, according to various embodiments, the electronic device 101 (e.g., the processor 120 of FIG. 1) may collect a plurality of first logs related to search words obtained from a plurality of electronic devices. According to an embodiment, the electronic device 101 may collect, as a log about a search word, (1) a search word, (2) whether an interaction with a search result of the search word is detected, and/or (3) information about content specified by the interaction. For example, referring to FIG. 8, when the first electronic device 102 selects (e.g., clicks) (809) a specific content of the search result (e.g., information related to 'battle ground') of the search word (e.g., bag), the selection result may be transmitted (811) to the electronic device 101, and the search engine module 210 of the electronic device 101 may transfer (813) a first log including the search word (e.g., bag), whether an interaction is detected (e.g., detected), and information about the content (e.g., specific content related to 'battle ground') to the log analysis module 220. The above-described operation 703 may be performed using the method described in operation 303 of FIG. 3.

In operation 705, according to various embodiments, the electronic device 101 (e.g., the processor 120 of FIG. 1) may identify a plurality of third logs classified per session established within a second specific period and related to a first search word specified by an interaction designated to release the session and first content specified by the interaction among a plurality of first logs. According to an embodiment, the second specific period may be a period after the first specific period. For example, referring to <610> of FIG. 6A, the electronic device 101 may identify the plurality of third logs classified per session established within a third period 603 (e.g., within the past four days from the current time point (11th day) related to the first search word specified by the interaction designated to release the session or the second search word corresponding to the first search word and the first content specified by the interaction or the second content corresponding to the first content. The above-described operation 705 may be performed using the method described in operation 305 of FIG. 3. For example, referring to FIG. 8, the log analysis module 220 may provide (815) search words specified by an interaction designated to release a session and content designated by the interaction to the similarity determination module 240. According to various embodiments, for example, the similarity determination module 240 may calculate (817) a similarity between the obtained search words, and may identify a second search word having a similarity exceeding a similarity predetermined for the first search word by using the similarity calculation result. For example, the similarity determination module 240 may calculate (819) a similarity between the obtained contents, and may identify the second content having a similarity exceeding a similarity predetermined for the first content by using the similarity calculation result. The similarity determination module 240 may transmit, e.g., a similarity calculation result of the first search word and/or a similarity calculation result of the first content to the dictionary management module 230.

In operation 707, according to various embodiments, the electronic device 101 (e.g., the processor 120 of FIG. 1) may calculate information about the effective search count for the first candidate word corresponding to the first search word in a session related to the first search word and/or the second search word during the second specific period, using the plurality of third logs. The above-described operation 707 may be performed using the method described in operation 307 of FIG. 3.

In operation 709, according to various embodiments, the electronic device 101 (e.g., the processor 120 of FIG. 1) may determine whether the information about the effective search count for the first candidate word corresponding to the second specific period exceeds a threshold value. The above-described operation 709 may be performed using the method described in operation 309 of FIG. 3.

In operation 711, according to various embodiments, the electronic device 101 (e.g., the processor 120 of FIG. 1) may reduce the registration lifetime of the first candidate word or may deregister the first candidate word from the dictionary. For example, referring to FIG. 8, the dictionary management module 230 may adjust (823) the registration lifetime of the 'bag' by reducing the registration lifetime of the 'bag' or deregistering the 'bag' from the dictionary.

According to various embodiments, when the information about the effective search count for the first candidate word is less than or equal to the threshold value, the electronic device 101 (e.g., the processor 120 of FIG. 1) may calculate the shortened lifetime of the first candidate word using the information about the effective search count and the second specific period. According to an embodiment, the electronic device 101 may calculate the shortened lifetime of the first candidate word by applying the second specific period to the difference between the threshold value and the information about the effective search count for the first candidate word. For example, the electronic device 101 may calculate the shortened lifetime (e.g., -0.4 days) of the first candidate word by applying (e.g., -0.1 *4=-0.4) the second specific period (e.g., 4 days) to the difference (e.g., -0.1) between the effective search rate (e.g., 1.1) of the first candidate word corresponding to the second specific period and the threshold value (e.g., 1.2). According to an embodiment, the electronic device 101 may reduce the registration lifetime of the first candidate word or may deregister the first candidate word from the dictionary, based on the difference between the remaining registration lifetime of the first candidate word and the shortened life of the first candidate word. For example, when the registration lifetime (e.g., 0.5 days) remaining from the current time point (e.g., the time point at which the shortened life is calculated) of the registration lifetime (e.g., 1.5 days) of the first candidate word is equal to or less than the shortened life (e.g., 0.7) of the first candidate word, the electronic device 101 may deregister the first candidate word from the dictionary. As another example, when the remaining registration lifetime (e.g., 0.5 days) from the current time point of the registration lifetime (e.g., 1.5 days) of the first candidate word exceeds the shortened lifetime (e.g., 0.3 days), the electronic device 101 may reduce the remaining registration lifetime (e.g., 0.2 days) of the first candidate word by subtracting the shortened lifetime (e.g., 0.3 days) from the remaining registration lifetime (e.g., 0.5 days) of the first candidate word. According to an embodiment, based on deregistration of the first candidate word from the dictionary, the electronic device 101 may store data related to information about the effective search count for the first candidate word in the reserved word database. The above-described operation 711 may be performed using the method described in operation 311 of FIG. 3.

In operation 713, according to various embodiments, the electronic device 101 (e.g., the processor 120 of FIG. 1) may extend the registration lifetime of the first candidate word. For example, referring to FIG. 8, the dictionary management module 230 may adjust (823) the registration lifetime of the 'bag' by increasing the registration lifetime of the 'bag'.

According to various embodiments, when the information about the effective search count for the first candidate word exceeds the threshold value, the electronic device 101 (e.g., the processor 120 of FIG. 1) may calculate the extended lifetime of the first candidate word using the information about the effective search count and the second specific period. According to an embodiment, the electronic device 101 may calculate the extended lifetime of the first candidate word by applying the second specific period to the difference between the threshold value and the information about the effective search count for the first candidate word. For example, the electronic device 101 may calculate the extended lifetime (e.g., 1.2 days) of the first candidate word by applying (e.g., 0.3 *4=1.2) the second specific period (e.g., 4 days) to the difference (e.g., 0.3) between the effective search rate (e.g., 1.5) of the first candidate word corresponding to the second specific period and the threshold value (e.g., 1.2). According to an embodiment, the electronic device 101 may extend the registration lifetime of the first candidate word by adding the extended lifetime to the registration lifetime of the first candidate word. For example, the electronic device 101 may extend the remaining registration lifetime (e.g., 1.7 days) of the first candidate word by adding the extended life (e.g., 1.2 days) to the remaining registration lifetime (e.g., 0.5 days) from the current time point (e.g., the time point at which the extended life is calculated) of the registration lifetime (e.g., 1.5 days) of the first candidate word. According to an embodiment, the electronic device 101 may change the registration lifetime of the first candidate word to an infinite value to permanently maintain the registered state of the first candidate word, based on (1) the period during which the first candidate word is registered in the dictionary exceeding a predetermined period or (2) receiving a message indicating that the first candidate word is a word included in a search index from an external electronic device (e.g., an external server).

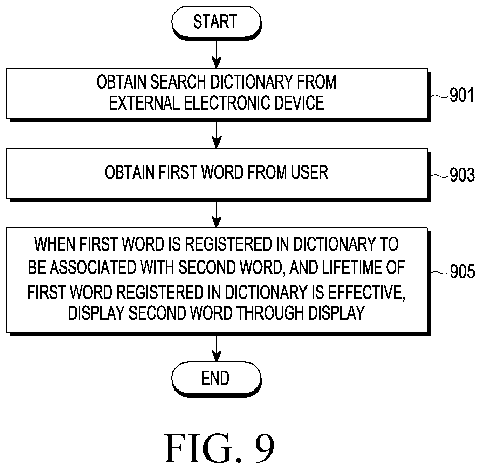

FIG. 9 is a flowchart illustrating an operation for an electronic device 101 (e.g., the electronic device 101 of FIG. 1) to display a second word associated with a first word using a dictionary obtained from an external electronic device according to various embodiments.

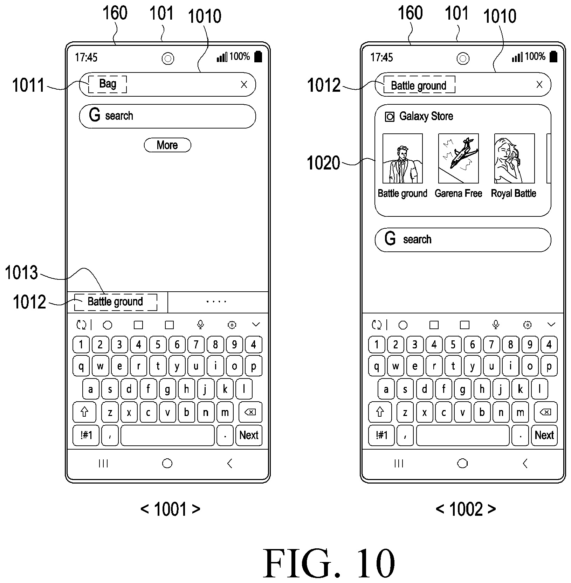

FIG. 10 is a view illustrating an embodiment in which an electronic device 101 displays a second word associated with a first word according to various embodiments.

In operation 901, according to various embodiments, the electronic device 101 (e.g., the processor 120 of FIG. 1) may obtain a search dictionary from an external electronic device (e.g., the server 108 of FIG. 1) through a communication module (e.g., the communication module 190 of FIG. 1). According to an embodiment, the search dictionary obtained by the electronic device 101 from the external electronic device 108 may mean the dictionary for search described with reference to FIGS. 2 to 8. According to an embodiment, the electronic device 101 may be a device (e.g., a smartphone) that requests a search, and the external electronic device 108 may be a device (e.g., a search server) that provides a search result for the requested search. According to an embodiment, the electronic device 101 may obtain a dictionary from the external electronic device 108 according to a predetermined period or may obtain the dictionary from the external electronic device 108 according to the user's download request. According to an embodiment, the electronic device 101 may store the obtained dictionary in a memory (e.g., the memory 130 of FIG. 1).

In operation 903, according to various embodiments, the electronic device 101 (e.g., the processor 120 of FIG. 1) may obtain a first word from the user as a search query. For example, referring to <1001> of FIG. 10, the electronic device 101 may obtain a first word 1011 (e.g., bag) input through a search word input window 1010 displayed on a display (e.g., the display module 160 of FIG. 1) as a search word.

In operation 905, according to various embodiments, when the first word is registered in the dictionary to be associated with the second word and the lifetime of the first word registered in the dictionary is effective, the electronic device 101 (e.g., the processor 120 of FIG. 1) may display the second word through the display 160. For example, referring to <1001> of FIG. 10, when a first word 1011 (e.g., bag) is registered in the dictionary to be associated with a second word 1012 (e.g., battle ground), and the lifetime registered for the first word is effective (e.g., a state in which the registration lifetime is not terminated), the electronic device 101 may identify the second word 1012 (e.g., battle ground) associated with the first word 1011 (e.g., bag) using the dictionary, and display the second word 1012 in a first area 1013 (e.g., at least a portion of the keypad area) in the display 160, through a search word suggestion function. For example, referring to <1002> of FIG. 10, when the user touches the second word 1012 (e.g., battle ground) displayed in the first area 1013, the electronic device 101 may replace the first word 1011 (e.g., bag) displayed on the search word input window 1010 with the second word 1012 (e.g., battle ground), and may display a search result 1020 for the second word 1012 obtained from the external electronic device 108 through the display 160 according to a user request.

According to an embodiment, the description of the first candidate word made with reference to FIG. 3 may apply to the first word, and the description of the first search word made with reference to FIG. 3 may apply to the second word. According to an embodiment, the first word may be registered in the dictionary to be associated with the second word, based on information about a first effective search count for the first word exceeding a first threshold, the information about the effective search count being calculated using a plurality of second logs classified per session (1) established within a first specific period and (2) related to the second word specified by a designated interaction to release a session and first content specified by the interaction, among a plurality of first logs regarding search words obtained from a plurality of electronic devices, and wherein According to an embodiment, the lifetime of the first word may be calculated using the information about the first effective search count and the first specific period and may be, together with the first word, registered in the dictionary.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to various embodiments, an electronic device (e.g., the electronic device 101 of FIG. 1) may comprise a communication module (e.g., the communication module 190 of FIG. 1) and a processor (e.g., the processor 120 of FIG. 1). The processor may be configured to collect a plurality of first logs regarding search words obtained from a plurality of electronic devices through the communication module, identify a plurality of second logs classified per session (1) established within a first specific period and (2) related to a first search word specified by a designated interaction to release a session and first content specified by the interaction, among the plurality of first logs, calculate information about a first effective search count for a first candidate word corresponding to the first search word using the plurality of second logs, calculate a lifetime of the first candidate word using the information about the first effective search count and the first specific period, based on the information about the first effective search count exceeding a first threshold, and associate the first candidate word to the first search word and register the first candidate word and the lifetime in a search dictionary.

According to various embodiments, the processor (e.g., the processor 120 of FIG. 1) may be configured to identify the plurality of second logs, (1) related to the first search word, (2) further classified per session related to second content specified by the interaction, (3) related to a second search word specified by the interaction, and (4) further classified per session related to the first content or the second content, among the plurality of first logs. The second search word may correspond to the first search word, and the second content may correspond to the first content.

According to various embodiments, the first effective search count may correspond to one of the same count or a smaller count among a search count for the first candidate word and a sum of a search count for the first search word and a search count for the second search word.

According to various embodiments, the processor (e.g., the processor 120 of FIG. 1) may be configured to calculate the information regarding the first effective search count for the first candidate word based on at least one of a session related to the first search word or a session related to the second search word.

According to various embodiments, the processor (e.g., the processor 120 of FIG. 1) may be configured to calculate the lifespan by applying the first specific period to a different between the information regarding the first effective search count and the first threshold.

According to various embodiments, the electronic device (e.g., the electronic device 101 of FIG. 1) may further comprise a memory (e.g., the memory 130 of FIG. 1). The processor (e.g., the processor 120 of FIG. 1) may be configured to include data related to the information about the first effective search count for the first candidate word in a reserved word database and store the reserved word database in the memory, based on the information about the first effective search count being the first threshold or less.

According to various embodiments, the processor (e.g., the processor 120 of FIG. 1) may be configured to identify a plurality of third logs classified per session (1) established within a second specific period, (2) related to the first search word or the second search word, and (3) related to the first content or the second content, among the plurality of first logs and calculate information about a second effective search count for the first candidate word using the plurality of third logs.

According to various embodiments, the processor (e.g., the processor 120 of FIG. 1) may be configured to extend the lifespan of the first candidate word using the information regarding the second effective search count and the second specific period, based on the information regarding the second effective search count exceeding a second threshold.

According to various embodiments, the processor (e.g., the processor 120 of FIG. 1) may be configured to calculate a shortened lifespan of the first candidate word using the information regarding the second effective search count and the second specific period, based on the information regarding the second effective search count being the second threshold or less.

According to various embodiments, the processor (e.g., the processor 120 of FIG. 1) may be configured to deregister the first candidate word from the dictionary based on a remaining registration lifetime of the lifetime of the first candidate word being the shortened lifetime or less; and
reduce the lifetime of the first candidate word based on the remaining registration lifetime of the first candidate word exceeding the shortened lifetime.

According to various embodiments, a method for operating an electronic device may comprise collecting a plurality of first logs regarding search words obtained from a plurality of electronic devices through a communication module, identifying a plurality of second logs classified per session (1) established within a first specific period and (2) related to a first search word specified by a designated interaction to release a session and first content specified by the interaction, among the plurality of first logs, calculating information about a first effective search count for a first candidate word corresponding to the first search word using the plurality of second logs, calculating a lifetime of the first candidate word using the information about the first effective search count and the first specific period, based on the information about the first effective search count exceeding a first threshold, and associating the first candidate word to the first search word and registering the first candidate word and the lifetime in a search dictionary.

According to various embodiments, identifying the plurality of second logs may include identifying the plurality of second logs, (1) related to the first search word, (2) further classified per session related to second content specified by the interaction, (3) related to a second search word specified by the interaction, and (4) further classified per session related to the first content or the second content, among the plurality of first logs. The second search word may correspond to the first search word, and the second content may correspond to the first content.

According to various embodiments, calculating the information about the first effective search count for the first candidate word may include calculating the information about the first effective search count for the first candidate word based on at least one of a session related to the first search word or a session related to the second search word.

According to various embodiments, calculating the lifespan of the first candidate word may include calculating the lifespan by applying the first specific period to a different between the information regarding the first effective search count and the first threshold.

According to various embodiments, the method may further comprise including data related to the information regarding the first effective search count for the first candidate word in a reserved word database and storing the reserved word database in a memory of the electronic device, based on the information regarding the first effective search count being the first threshold or less.

According to various embodiments, the method may further comprise identifying a plurality of third logs classified per session (1) established within a second specific period, (2) related to the first search word or the second search word, and (3) related to the first content or the second content, among the plurality of first logs and calculating information about a second effective search count for the first candidate word using the plurality of third logs.

According to various embodiments, the method may further comprise extending the lifespan of the first candidate word using the information regarding the second effective search count and the second specific period, based on the information regarding the second effective search count exceeding a second threshold.

According to various embodiments, the method may further comprise calculating a shortened lifespan of the first candidate word using the information regarding the second effective search count and the second specific period, based on the information regarding the second effective search count being the second threshold or less.

According to various embodiments, an electronic device (e.g., the electronic device 101 of FIG. 1) may comprise a communication module (e.g., the communication module 190 of FIG. 1), a display (e.g., the display module 190 of FIG. 1), and a processor (e.g., the processor 120 of FIG. 1) configured to obtain a search dictionary from an external electronic device through the communication module, obtain a first word (e.g., the first word 1011 of FIG. 10) from a user, and display a second word (e.g., the second word 1012 of FIG. 10) through the display when the first word is registered in the dictionary to be associated with the second word, and a lifetime of the first word registered in the dictionary is effective. The first word may be registered to be associated with the second word in the dictionary, based on information about a first effective search count for the first word exceeding a first threshold, the information about the effective search count being calculated using a plurality of second logs classified per session (1) established within a first specific period and (2) related to the second word specified by a designated interaction to release a session and first content specified by the interaction, among a plurality of first logs regarding search words obtained from a plurality of electronic devices. The lifetime of the first word may be calculated using the information about the first effective search count and the first specific period and may be, together with the first word, registered in the dictionary.

## Claims

1. An electronic device, comprising:
a communication module; and
a processor, wherein the processor is configured to:
collect a plurality of first logs regarding search words obtained from a plurality of electronic devices through the communication module;
identify a plurality of second logs classified per session (1) established within a first specific period and (2) related to a first search word specified by a designated interaction to release a session and first content specified by the interaction, among the plurality of first logs;
calculate information about a first effective search count for a first candidate word corresponding to the first search word using the plurality of second logs;
calculate a lifetime of the first candidate word using the information about the first effective search count and the first specific period, based on the information about the first effective search count exceeding a first threshold; and
associate the first candidate word to the first search word and register the first candidate word and the lifetime in a search dictionary.

2. The electronic device of claim 1, wherein the processor is configured to identify the plurality of second logs, (1) related to the first search word, (2) further classified per session related to second content specified by the interaction, (3) related to a second search word specified by the interaction, and (4) further classified per session related to the first content or the second content, among the plurality of first logs, and
wherein the second search word corresponds to the first search word, and the second content corresponds to the first content.

3. The electronic device of claim 2, wherein the first effective search count corresponds to one of the same count or a smaller count among a search count for the first candidate word and a sum of a search count for the first search word and a search count for the second search word.

4. The electronic device of claim 3, wherein the processor is configured to calculate the information about the first effective search count for the first candidate word based on at least one of a session related to the first search word or a session related to the second search word.

5. The electronic device of claim 1, wherein the processor is configured to calculate the lifetime by applying the first specific period to a difference between the information about the first effective search count and the first threshold.

6. The electronic device of claim 1, further comprising a memory,
wherein the processor is configured to include data related to the information about the first effective search count for the first candidate word in a reserved word database and store the reserved word database in the memory, based on the information about the first effective search count being the first threshold or less.

7. The electronic device of claim 2, wherein the processor is configured to:
identify a plurality of third logs classified per session (1) established within a second specific period, (2) related to the first search word or the second search word, and (3) related to the first content or the second content, among the plurality of first logs; and
calculate information about a second effective search count for the first candidate word using the plurality of third logs.

8. The electronic device of claim 7, wherein the processor is configured to extend the lifetime of the first candidate word using the information about the second effective search count and the second specific period, based on the information about the second effective search count exceeding a second threshold.

9. The electronic device of claim 7, wherein the processor is configured to calculate a shortened lifetime of the first candidate word using the information about the second effective search count and the second specific period, based on the information about the second effective search count being the second threshold or less.

10. The electronic device of claim 9, wherein the processor is configured to:
deregister the first candidate word from the dictionary based on a remaining registration lifetime of the lifetime of the first candidate word being the shortened lifetime or less; and
reduce the lifetime of the first candidate word based on the remaining registration lifetime of the first candidate word exceeding the shortened lifetime.

11. A method for operating an electronic device, the method comprising:
collecting a plurality of first logs regarding search words obtained from a plurality of electronic devices through a communication module;
identifying a plurality of second logs classified per session (1) established within a first specific period, and (2) related to a first search word specified by a designated interaction to release a session and first content specified by the interaction, among the plurality of first logs;
calculating information about a first effective search count for a first candidate word corresponding to the first search word using the plurality of second logs;
calculating a lifetime of the first candidate word using the information about the first effective search count and the first specific period, based on the information about the first effective search count exceeding a first threshold; and
associating the first candidate word to the first search word and registering the first candidate word and the lifetime in a search dictionary.

12. The method of claim 11, wherein identifying the plurality of second logs includes identifying the plurality of second logs, (1) related to the first search word, (2) further classified per session related to second content specified by the interaction, (3) related to a second search word specified by the interaction, and (4) further classified per session related to the first content or the second content, among the plurality of first logs, and
wherein the second search word corresponds to the first search word, and the second content corresponds to the first content.

13. The method of claim 12, wherein the first effective search count corresponds to one of the same count or a smaller count among a search count for the first candidate word and a sum of a search count for the first search word and a search count for the second search word.

14. The method of claim 13, wherein calculating the information about the first effective search count for the first candidate word includes calculating the information about the first effective search count for the first candidate word based on at least one of a session related to the first search word or a session related to the second search word.

15. An electronic device, comprising:
a communication module;
a display; and
a processor configured to:
obtain a search dictionary from an external electronic device through the communication module;
obtain a first word from a user; and
display a second word through the display when the first word is registered in the dictionary to be associated with the second word, and a lifetime of the first word registered in the dictionary is effective,
wherein the first word is registered to be associated with the second word in the dictionary, based on information about a first effective search count for the first word exceeding a first threshold, the information about the effective search count being calculated using a plurality of second logs classified per session (1) established within a first specific period and (2) related to the second word specified by a designated interaction to release a session and first content specified by the interaction, among a plurality of first logs regarding search words obtained from a plurality of electronic devices, and
wherein the lifetime of the first word is calculated using the information about the first effective search count and the first specific period and is, together with the first word, registered in the dictionary.
